# EUROPEAN PATENT SPECIFICATION

(11) **EP 3 295 609 B1**
(45) Date of publication and mention of the grant of the patent: **09.10.2019**
(21) Application number: 16792930.6
(22) Date of filing: 09.05.2016
(51) Int. Cl.: H04L 12/24, H04L 29/08

(54) **METHOD AND DEVICE FOR PROVIDING COMMUNICATION SERVICE**
VERFAHREN UND VORRICHTUNG ZUR BEREITSTELLUNG EINES KOMMUNIKATIONSDIENSTES
PROCÉDÉ ET DISPOSITIF PERMETTANT DE FOURNIR UN SERVICE DE COMMUNICATION

(30) Priority: 13.05.2015 KR 20150066944
(43) Date of publication of application: 21.03.2018
(73) Proprietor: Samsung Electronics Co., Ltd., Suwon-si, Gyeonggi-do 16677 (KR)
(72) Inventor: LEE, Jae-keun, Seoul 04358 (KR)
(74) Representative: HGF Limited
(86) International application number: PCT/KR2016/004803
(87) International publication number: WO 2016/182284

(56) References cited:
- WO-A1-2014/010784
- WO-A1-2015/056928
- US-A1- 2010 280 637
- US-A1- 2014 244 001
- US-A1- 2014 244 568
- US-A1- 2014 244 710
- US-A1- 2014 331 144
- US-A1- 2015 019 342

## Description

### Technical Field

Methods and apparatuses consistent with exemplary embodiments relate to providing a communication service and, more particularly, to a method of receiving data from a sensing device according to context information of a service device and displaying the received data by use of a template stored in the service device, and a corresponding device configured to implement the method.

### Background Art

Society is undergoing a hyperconnectivity revolution based on Internet of things (IoT) in which all devices are connected to the Internet. Even though less than one percent of devices are connected to the Internet at present, the percentage of connected devices will increase, and such growth of the IoT is expected to create a variety of innovations and business opportunities.

As an example of ubiquitous IoT services, an Internet-connected car may support a service of automatically transmitting an emergency message and an autonomous driving service. Healthcare products that may measure a heart rate, an amount of exercise, and so on may support healthcare services. Smart home services may include remote control of home appliances or closed circuit television (CCTV) monitoring service.

IoT technologies include sensing technologies, wired and wireless communication and network infrastructure technologies, and IoT service interfacing technologies.

Such sensing technologies include remote sensing by use of traditional sensors such as a temperature sensor, a humidity sensor, a thermal sensor, a gas sensor, an illumination sensor, and an ultrasonic sensor; physical sensors that may acquire information from a physical object or surroundings such as a synthetic aperture radar (SAR), radar, a position sensor, a motion sensor, and an image sensor.

Physical sensors are advancing to smart sensors that have standard interfaces and information processing capabilities to enhance application properties. Also, the physical sensors may have a virtual sensing function of extracting certain information from sensed data, and the virtual sensing function may be implemented in IoT service interfaces.

IoT sensing technologies employ a multiple sensor technology that is more advanced than conventional independent sensors, and allow extraction of more intelligent and high-dimensional information.

The wired or wireless communication and network infrastructure technologies of the IoT may include all communication services, apparatuses, and network infrastructure that used for networking humans, devices, and services regardless of communication protocols and physical layers such as wireless personal area networks (WPAN), Wi-Fi, 3G/4G/LTE, Bluetooth, Ethernet, broadband convergence network (BcN), satellite communication, microware, serial communication, and power line communication.

The IoT service interface enables interfacing of IoT entities such as humans, devices, and services with application services each of which provide a specific function. The IoT service interface is not a simple network interface, but is a comprehensive term that provides or facilitates a variety of interfacing operations, for providing services, including: sensing, manipulation, extraction, processing, and storing of information; determination; situation awareness; recognition; security and privacy protection; authentication and authorization; discovery; object formalization; ontology-based semantics, open sensor-API, virtualization, positioning, processor management, open platforms, middleware; data mining; Web Services; and social network services.

US2014/244001 A1 discloses a technique for contorlling IoT devices from a smart controller.

US2010/280637 A1 discloses a hardware configurable security, monitoring and automation controller having modular communication protocol interfaces.

WO2015/056928 A1 discloses a method and system for contextualizing sensor, service and device data with mobile devices.

### Disclosure of Invention

### Solution to Problem

Aspects of exemplary embodiments provide a communication providing device that determines services executable by the device based on sensed data and provides a determined service by using a template stored in the device.

Aspects of exemplary embodiments provide a server that receives sensed data from sensor devices and provides services executable by the device in response to a request from the device. A service user interface may be configured by using a template stored in the device without installing separate applications for each of the devices.

### Brief Description of Drawings

The above and other aspects will become apparent and more readily appreciated from the following description of the exemplary embodiments, taken in conjunction with the accompanying drawings in which:
FIG. 1 is a block diagram of a device according to an exemplary embodiment of the present disclosure;
FIG. 2 is a block diagram of a server according to an exemplary embodiment of the present disclosure;
FIG. 3 illustrates various types of devices according to an exemplary embodiment of the present disclosure;
FIG. 4 is a flowchart illustrating a method in which a first device provides a service according to an exemplary embodiment;
FIG. 5 is a flowchart illustrating a method in which a first device provides a service based on information that the first device receives from a second device according to an exemplary embodiment;
FIG. 6 illustrates an example of a first device receiving device information from other devices according to an exemplary embodiment;
FIG. 7 is a flowchart illustrating a method in which a first device provides a service based on device information received from a server;
FIG. 8 illustrates an example of a server receiving device information from devices according to an exemplary embodiment;
FIG. 9 illustrates a method in which a device according to an exemplary embodiment of the present disclosure provides a service supporting a purchase of goods based;
FIG. 10 illustrates a method in which a device according to an exemplary embodiment of the present disclosure provides a child monitoring service;
FIGS. 11A through 11C illustrate methods in which a device according to an exemplary embodiment of the present disclosure receives occupancy information indicating whether a space is occupied;
FIG. 12 illustrates a method in which a device according to an exemplary embodiment of the present disclosure receives parking space information in a parking lot;
FIGS. 13, 14, and 15 illustrate methods of providing services through a gateway connected between a first device and the other devices; and
FIGS. 16, 17, and 18 illustrate templates stored in a device according to an exemplary embodiment of the present disclosure.

### Best Mode for Carrying out the Invention

According to an aspect of an exemplary embodiment, there is provided a method of providing a service to a user by a first device according to claims 1-7.

According to an aspect of an exemplary embodiment, there is provided a first device providing a service to a user according to claims 8-14.

### Mode for the Invention

Reference will now be made in detail to exemplary embodiments, examples of which are illustrated in the accompanying drawings, wherein like reference numerals refer to like elements throughout. In this regard, the exemplary embodiments may have different forms and should not be construed as being limited to the descriptions set forth herein. Accordingly, the exemplary embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

It will be understood that when an element is referred to as being "connected to" another element, it can be "directly connected to" the other element or "electrically connected to" the other element. The terms "comprises" and/or "comprising" or "includes" and/or "including" or "contains" and/or "containing" when used in this specification, specify the presence of stated elements, but do not preclude the presence or addition of one or more other elements.

In this specification, a device may be a general device or apparatus that may be connected to a gateway so that Internet of things (IoT) is applied. For example, the devices may include, but are not limited to, a temperature sensor, a humidity sensor, an acoustic sensor, a motion sensor, a proximity sensor, a gas sensor, a heat sensor, a refrigerator, a CCTV device, a TV, a washing machine, a humidifier, an electric lighting, and a fire alarm.

In this specification, the term 'device' may be interchanged with the term 'apparatus', and the terms 'device' and 'apparatus' may have the same meaning.

In this specification, device information is information indicating or identifying a device, and properties of the device and may include a device identification number, a type of the device, a type and attribute of sensed data from the device, and a sensing interval. Device information may be referenced to determine properties of the device.

Services executable by the device according to an exemplary embodiment may include a service based on communication with a server or another device, and a service operable in and/or executed by the device. Services disclosed herein are presented for exemplary purposes and a wide variety of services in addition to the exemplary services may be provided by the device or the server.

The services disclosed herein include all kinds of services utilizing information collected by the gateway. The device and the server may communicate with the gateway, and the services may be provided by the device and/or the server. Examples of the services include, but are not limited to, a home networking service, a security system, a fire alarm system, an electric power management service, and a content sharing service. The services may also be provided by the gateway.

In this specification, service information includes, but is not limited to, a service identification number, a type and a number of devices required for the service, a priority of a device required for the service, a type and amount of sensed data required for the service, and a priority of the sensed data for the service.

A message transmission rule indicates from which device and how the sensed data is to be received in accordance with a resource consumption ratio of the gateway. The message transmission rule may include, for example, a rule for a device to be used for the service, a device operation to be paused, rules for processing the sensed data, a transmission interval of the sensed data, and a transmission interval of the sensed data.

The concepts disclosed in this specification may be utilized in all fields in which inter-device communication is applied. That is, those having ordinary skill in the art will appreciate that the present disclosure may be applied to any systems or services that allow inter-device communication by Internet of things (IoT), a ubiquitous service, a smart home service, and a connected car service.

Hereinbelow, exemplary embodiments according to the present disclosure will be described with reference to accompanied drawings.

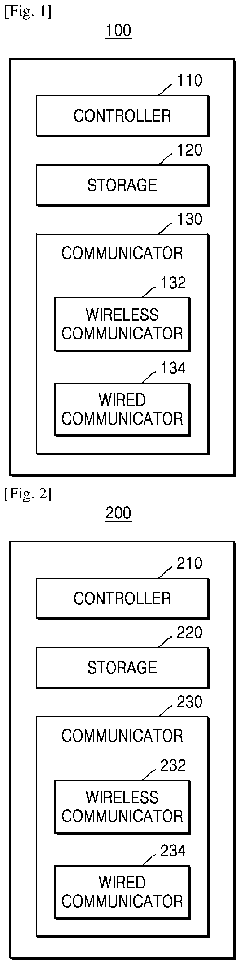

FIG. 1 is a block diagram of a device according to an exemplary embodiment of the present disclosure.

The device 100 according to an exemplary embodiment may be a device that has inter-device communication capability and is not limited to a specific device. The device 100 may be any kind of device that can transmit to or receive information from another device.

The device 100 according to an exemplary embodiment may include a controller 110, storage 120, and a communicator 130. Also, the communicator 130 may include a wireless communicator 132 and a wired communicator 134.

The controller 110 may be a central processing unit, microprocessor, or the like. The controller 110 may generate context information of the device 100 based on information that the controller 110 receives from other devices. Also, the controller 110 may send, to a server, the context information of the device 100 and a request a list of services executable via the device 100. The controller 110 may receive a list of services from the server in response to the request and generate a recommended service user interface (UI) by using a template included in the device 100 for a service included in the list.

In the present disclosure, the context information indicates a current user or a status of the device. For example, the context information may include a location of the user and an atmospheric pressure or illumination level in which the device 100 operates or is situated. The context information may include information of an application program being executed by the device, performance of the device, and neighboring devices.

The storage 120 may be a memory such as RAM, ROM, flash, disk, or the like. The storage 120 may store information received from another device and the context information. The storage 120 may also store the list of services executable via the device 100 and a list of services received from the server. The storage 120 may store at least one template. A template may be user interface (UI) information for displaying on a screen while the device 100 provides a service. The storage 120 may store a performance history of a service that is being provided or is to be provided. The storage 120 may store a database.

The communicator 130 may be a communication interface such as an Ethernet interface or a wireless communication interface having an antenna that communicates over wireless communication protocol such as 802.x, WiFi, and the like. The communicator 130 may provide communication with another device or a sensor. Also, the communicator 130 may communicate with a network device such as the server through a wired or wireless network. For example, the communication may include receiving sensed data of a device, such as a sensor, or transmitting information of the device 100 to another device.

The network may be, but is not limited to, a local area network (LAN), a wide area network (WAN), a value added network (VAN), a mobile radio communication network, a satellite communication network, or a combination of such networks. The network may be a data network in a broad sense that facilitates communication between network entities, and the network may include wired Internet, wireless Internet, or a mobile wireless communication network.

The device described in this specification may provide, among other functions, general functions of a portable terminal. Thus, the device may be a smartphone, a tablet PC, a smart watch, a PC, a smart glass, a smart TV, a personal digital assistant (PDA), a laptop computer, a media player, a microserver, a global positioning system (GPS) receiver, an eBook reader, a digital broadcast receiver, a navigation system, a kiosk, an MP3 player, a digital camera, and a mobile or non-mobile computer, but is not limited thereto.

The device may be a smartphone that communicates with another device through a cellular network or the Internet to provide, for example, voice communication, messaging services, and Internet services. Also, the device may include various modules providing functions of a camera, a beam projector, a scanner, a printer, and so on.

Further, various services may be provided based on an operating system of the smartphone itself or an application program that is additionally installed or remotely accessible from an external device. That is, various services such as financial services, booking services, and sensing services may be provided by the smartphone itself or relevant application programs set to invoke external services.

FIG. 2 is a block diagram of a server according to an exemplary embodiment of the present disclosure. The server 200 may include a controller 210, storage 220, and a communicator 230.

The controller 210 may be a central processing unit, microprocessor, or the like. The controller 210 may determine the services executable via the device 100 based on the request for the list of services from the device 100. The controller 210 may determine the services executable in the device 100 based on the context information of the device 100, which may include device information of the device 100, application information, time information, location information, temperature information, humidity information, pressure information, sound information, motion information, proximity sensing information, gas sensing information, and/or thermal information.

Also, the controller 210 may determine the services executable via the device 100 based on information acquired directly from the device 100 by the server 200. Further, the controller 210 may determine the services executable via the device 100 based on the request from the device 100 and the information acquired by the server 200. In such a case, because the number of executable services is based on a larger number of variables compared to the case in which the information is received only from the device 100, the number of services may be increased or refined, or the accuracy or relevance of the services may be enhanced.

The storage 220 may be a memory such as RAM, ROM, flash, disk, or the like. The storage 220 may store information being processed by the server 200, in addition to the context information and the request received from the device 100. Also, the storage 220 may store the list of services determined by the controller 210 and information of at least one device.

The communicator 230 may be a communication interface such as an Ethernet interface or a wireless communication interface having an antenna that communicates over wireless communication protocol such as 802.x, WiFi, and the like. The communicator 230 may include a wireless communicator 232 and a wired communicator 234 and may communicate with and receive information from at least one device. Also, the communicator 230 may communicate with and send the device 100 the list of services executable via the device 100.

The device 100 and the server 200 may receive sensed data from a gateway and provide services to a user based on the sensed data. For example, the device 100 and the server 200 may provide a fire alarm system, a security system, and a home networking service based on the sensed data received from the gateway.

The device 100 applicable in this disclosure may be a smartphone, a tablet PC, a PC, a smart TV, a mobile phone, a personal digital assistant (PDA), a laptop computer, a media player, a microserver, a global positioning system (GPS) receiver, an eBook reader, a digital broadcast receiver, a navigation system, a kiosk, an MP3 player, a digital camera, and a mobile or non-mobile computer, but is not limited thereto. Also, the device 100 may be a wearable device such as a watch, glasses, a hair band, or a ring. However, the device 100 is not limited to such examples, but may include any kind of device capable of receiving sensed data for providing services from the gateway through the network.

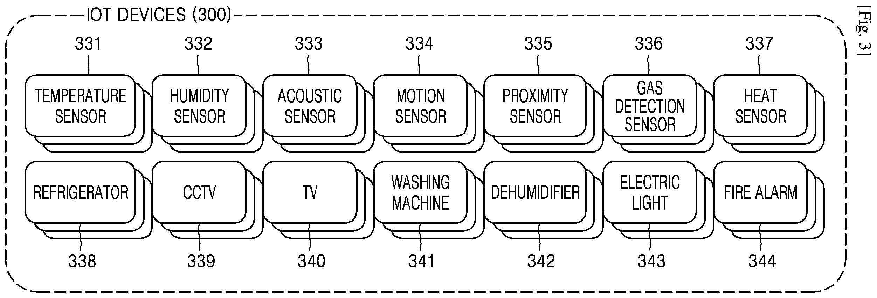

FIG. 3 illustrates various types of devices according to an exemplary embodiment of the present disclosure.

Various kinds of devices may be involved in the present disclosure. A temperature sensor 331, in this disclosure, is a sensor capable of sensing temperature. The temperature sensor 331 is a temperature sensor in a broad sense, and may include a mercury temperature sensor, a temperature patch which changes color at a specific temperature, an infrared temperature sensor, and a laser temperature sensor.

A humidity sensor 332, in this disclosure, is a sensor capable of sensing humidity. The humidity sensor 332 is a humidity sensor in a broad sense, and may include a dry-wet humidity sensor, a polymeric humidity sensor, a metal oxide humidity sensor, a colloidal magnetite humidity sensor, a microwave humidity sensor, an iron oxide sintered film humidity sensor, and a ceramic humidity sensor.

An acoustic sensor 333, in this disclosure, is a sensor capable of measuring acoustic information. A typical example of the acoustic sensor 333 may be a sensor such as a microphone that generates an electrical signal based on a received sonic or ultrasonic wave. Also, the acoustic sensor 333 may include a sensor capable of measuring a magnitude of a sound and a sensor capable of extracting a sound component of a specific frequency from a sound having complex frequency components.

A motion sensor 334, in this disclosure, is a sensor capable of detecting motion of the device. The motion sensor 334 may be a gyroscope sensor or an acceleration sensor in the device.

A proximity sensor 335, in this disclosure, is a sensor capable of detecting an object entering the proximity of the device. The proximity sensor 335 may detect the object approaching the device by sensing a change in an electromagnetic or electrostatic signal level.

A gas detection sensor 336, in this disclosure, is a sensor capable of detecting a gas and enables the detection of a specific gas. The gas detection sensor 336 may be an infrared gas detector or a gas analyzer.

A heat sensor 337, in this disclosure, may include heat sensor for sensing heat caused by fire, an infrared heat sensor, and a thermal detector for diagnosing influenza patients.

It should be noted that the device in this disclosure is not limited to sensors but may be in a broad sense any kind of device that may be connected to the Internet such as a refrigerator 338, a closed circuit television (CCTV) 339, a TV 340, a washing machine 341, a dehumidifier 342, an electric light 343, or a fire alarm 344.

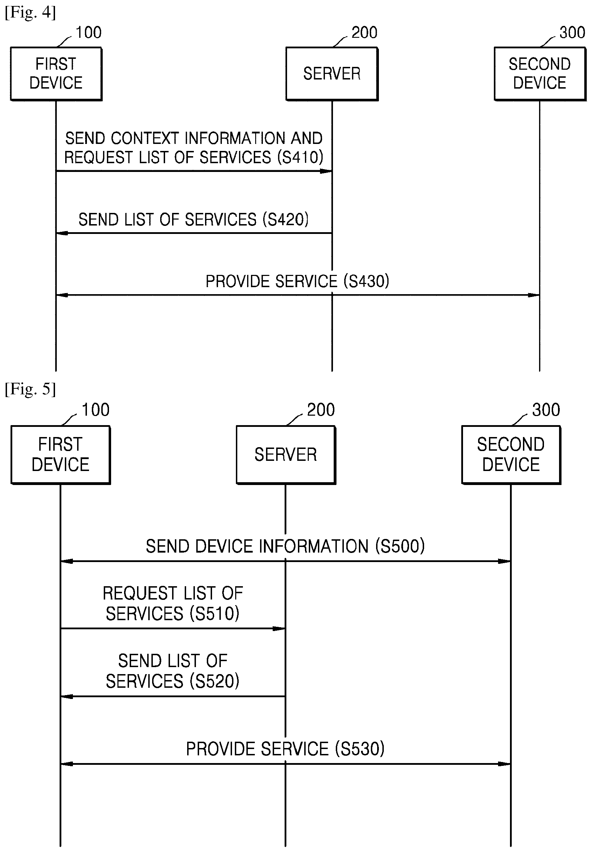

FIG. 4 is a flowchart illustrating a method in which the first device provides an available service according to an exemplary embodiment.

The first device 100 may check the list of available services based on a list of services the first device 100 receives from the server 200.

In operation S410, the first device 100 may send the context information of the first device 100 to the server 200. Also, the first device 100 may send a request to the server 200 to request information indicating which of the services are accessible by the first device 100.

The request sent from the first device 100 to the server 200 may include status information indicating a location of the first device 100 and the applications being executed by the first device 100, information of other devices not detected by the first device 100, and information requested by the device and stored in the server 200.

Also, the request may include information about a template stored in the first device 100. For example, the first device 100 may include, in the request, the template information of the template stored in the storage 120 of the first device 100, the template information including a device ID, a device type, data type, a data attribute, and sensing interval information.

In operation S420, the server 200 may analyze the current status of the first device 100 and determine services are executable via the first device 100 based on the context information of the first device 100 received from the first device 100. The server 200 may generate a list of the services executable via the first device 100 and send the list of the services to the first device 100. The server 200 may send the information in accordance with the information corresponding to the current template stored in the first device 100. For a service that cannot be displayed by the first device 100 due to the current template, the server 200 may send a new template to the first device 100 for displaying the service. The first device 100 may determine the executable services by receiving the list of services from the server 200.

In operation S430, the first device 100 may choose at least one service among the executable services and communicate with the second device 300 to provide the chosen service.

Hereinafter, described are methods in which the first device 100 checks the device information. There may be two methods of checking the device information. In a first method, the first device 100 may directly receive the device information. In a second method, the first device 100 may receive the device information from the server 200 after communication between the server 200 and another device.

FIG. 5 is a flowchart illustrating a method in which the first device provides an executable service based on information that the first device 100 has received from the second device 300 according to an exemplary embodiment.

In operation S500, the second device 300 may send device information of the second device 300 to the first device 100 and the first device 100 may receive the device information of the second device 300. In this disclosure, the device information sent by the second device 300 may be information about the second device 300 or information received by or measured by the second device 300. Thus, the device information sent by the second device 300 should be understood in a broad sense to include information directly or indirectly related to the second device 300.

In operation S510, the first device 100 may send the context information of the first device 100 to the server 200. Also, the first device 100 may send a request to the server 200 to request the list of services executable via the first device 100. The first device 100 may limit the context information of the first device 100 further according to the device information sent by the second device 300 before sending the context information of the first device 100 to the server 200.

In operation S520, the server 200 may analyze the current status of the first device 100 and determine services are executable via the first device 100 based on the context information of the first device 100 received from the first device 100. The server 200 may generate a list of the services executable via the first device 100 and send the list of the services to the first device 100. The first device 100 may determine the executable services by receiving the list of executable services from the server 200. The list of services sent by the server 200 may include information of services executable via the first device 100 and information regarding devices related to the services.

Device information of devices that were not detected by the first device 100 but detected by the server 200 or previously stored device information may be included in the information indicating the list of services. Further, the server 200 may provide only information of devices controllable according to the context environment of the first device 100.

In operation S530, the first device 100 may choose at least one service from among the executable services and communicate with the second device 300 to provide the chosen service.

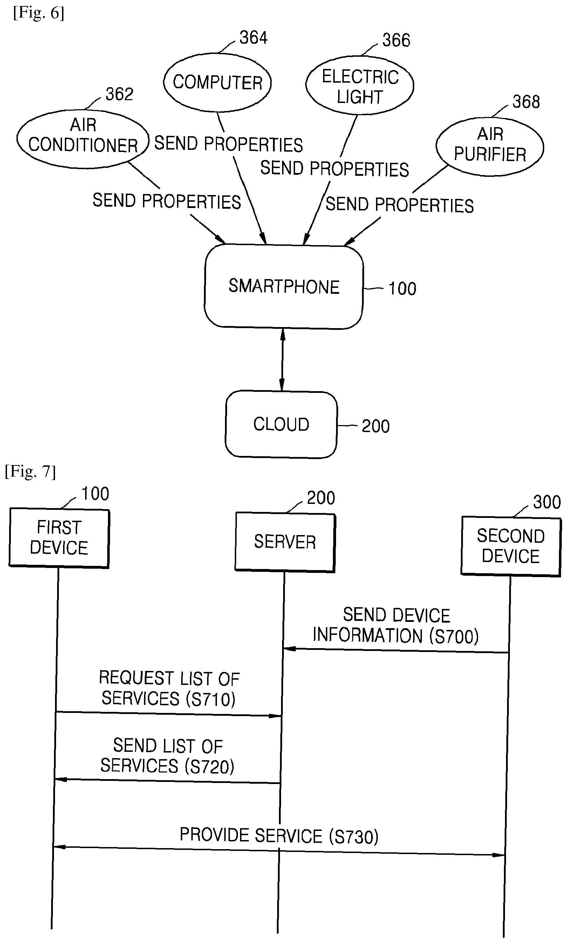

FIG. 6 illustrates an example in which the first device receives device information from other devices according to an exemplary embodiment.

The first device 100 shown in FIG. 5 may be a smartphone device and may receive device information from devices that support inter-device communication such as an air conditioner 362, a computer 364, an electric light 366, and an air purifier 368.

The air conditioner 362 may send the first device 100 information such as specifications of the air conditioner 362, information of temperature and humidity measured by the air conditioner 362, and information the air conditioner 362 has received from other devices.

The computer 364 may send the first device 100 information of the computer 364. Because computers are utilized in various fields, the information of the computer 364 may include a large amount of information such as specifications of the computer 364, information regarding programs being executed by the computer 364, information stored in the computer 364, and information the computer 364 has received from other devices.

The electric light 366 may send the first device 100 information such as specifications of the electric light 366, information of an illumination level measured by the electric light 366, and information the electric light 366 has received from other devices.

The air purifier 368 may send the first device 100 information such as specifications of the air purifier 368, information of an air contamination level measured by the air purifier 368, and information the air purifier 368 has received from other devices.

The context information, based on which the first device 100 receives a list of services from the server or cloud system 200, may include, for example, the location of the first device 100 and a program being executed by the first device 100, and the first device 100 may provide at least one of the services included in the list.

FIG. 7 is a flowchart illustrating a method in which the first device 100 provides a service based on device information that th e first device 100 has received from the server.

In operation S700, a second device 300 may send device information of the second device 300 to the server 200 so that the first device 100 may receive the device information of the second device 300 from the server 200. Although FIG. 7 only illustrates a single second device 300, it should be understood that multiple devices may each send corresponding device information to the server 200. The server 200 may be a logical server such as a cloud server in a network or a physical server that may communicate with each of the devices. The server 200 may accumulate the information of each of the devices, classify the information according to various criteria, and store the classified information.

The server 200 may classify the information according to each device or store the information in groups corresponding to each kind of device. Also, the server 200 may store an operation sequence of relevant devices. For example, when the first device is being held by a user when the user arrives home, a porch light sensor activates, followed by an indoor light sensor or an electric appliance. Thus, an operating sequence including the porch light sensor and the indoor light sensor may be stored.

In operation S710, the first device 100 may send the context information of the first device 100 to the server 200. Also, the first device 100 may send the request for the list of services to the server 200 to request the list of services executable via the first device 100. The first device 100 may limit the context information of the first device 100 further with reference to the device information before sending the context information of the first device 100 to the server 200.

In operation S720, the server 200 may analyze the current status of the first device 100 and determine services are executable via the first device 100 based on the context information of the first device 100 received from the first device 100. The server 200 may generate a list of the services executable via the first device 100 and send the list of the services to the first device 100. The first device 100 may determine the executable services by receiving the list of services from the server 200.

In operation S730, the first device 100 may choose at least one service from among the executable services and communicate with a device corresponding to the service to provide the determined service.

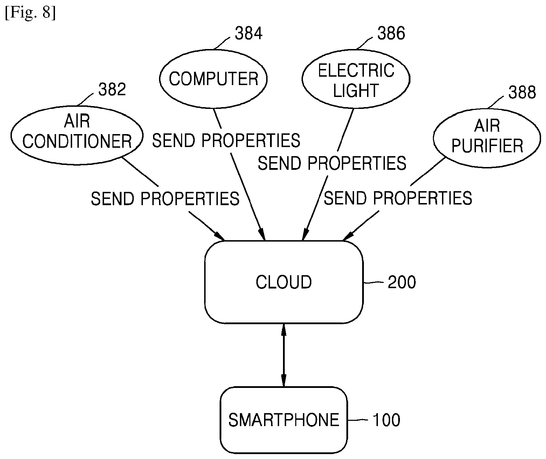

FIG. 8 illustrates an example in which a server receives device information according to an exemplary embodiment.

As shown in FIG. 8, the server 200 may be, for example, a cloud server, and the first device 100 may be, for example, a smartphone. The server 200 may receive device information from various devices and send information processed by the server 200 to the first device 100. Because the device information was described above with reference to FIG. 6, detailed descriptions thereof will not be repeated.

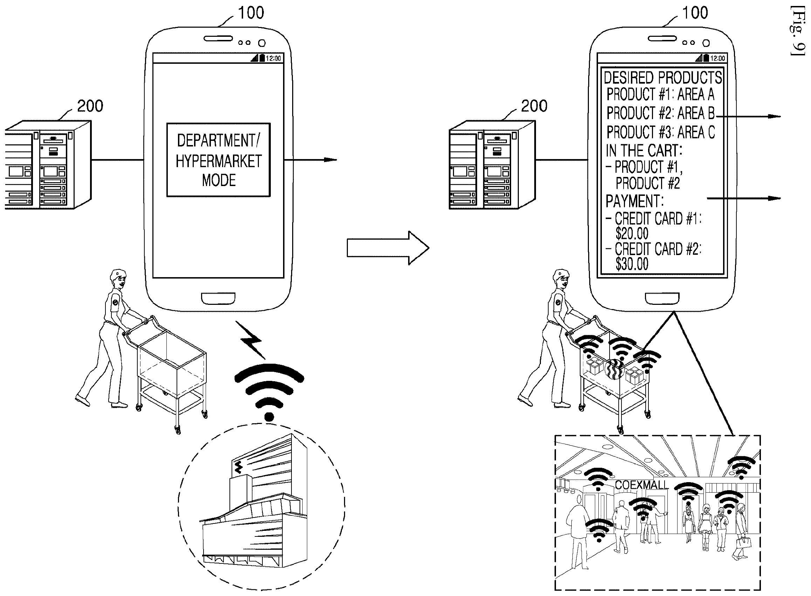

FIG. 9 illustrates a method in which a device according to an exemplary embodiment of the present disclosure provides a service supporting a purchase of goods.

A user of the device 100 may purchase various goods in a shopping center such as a department store or a hypermarket. In such a case, the device 100 may provide a service based on a variety of information the device 100 has received from other devices.

As shown at the left side of FIG. 9, when the user of the device 100 enters a shopping center, the device 100 may determine whether the device 100 is currently located in the shopping center or near the shopping center based on a GPS sensor included in the device 100 or communication with a wireless LAN access point.

When the device 100 is located in the shopping center, the device 100 may request (the list of) the services executable by the device 100 from the network server 200. Here, the device 100 may send the context information indicating the state of the device 100 along with the request. The context information of the device 100 may include location information of the device 100 indicating whether the device 100 is located in the shopping center or specification information of the device 100 indicating communication protocol stacks supported by the device 100 and a storage capacity of the device. The context information may further include a variety of information related to the device 100.

After receiving the context information from the device 100, the server 200 may recognize, based on the device information stored in the server 200, that the device user is putting food items into a cart and is moving from an area A to an area B, for example. Meanwhile, in the case in which information about food items stored in the device is provided to the server 200 through the context information, the server 200 may determine areas where the food items are located.

The server 200 may determine the list of services executable by the device 100 based on the context information. For example, when the server 200 discovers that the device 100 is moving from area A to area B, the server 200 may provide the device 100 with a notification that the device user may use a payment service for purchasing goods in area B. If there is a customer service center in area B, the server 200 may provide the device 100 with a notification that a customer service center is located in area B and the device 100 may use a service that displays customer membership information.

When the device user purchases goods such as the food items in the shopping center, the user may move with a cart loaded with the goods. Here, a device installed in the cart may identify the goods loaded in the cart by recognizing identification information attached to the goods or by using a sensor installed in the cart. The device in the cart may send the identification information to the device 100, and thus the device 100 may acquire property information of the goods loaded in the cart, such as, price, size, ingredients, etc.

The device 100 may implement a user interface (UI) on a screen using a template based on the list of executable services received from the server 200 and the information acquired from the device in the cart. For example, when the device 100 is preparing for payment, the screen of the device 100 may display price information, discount information, and payment information of the products being purchased.

The device user may use the payment service based on the displayed information and complete the payment by passing an automatic payment counter. In such a case, the payment may be completed through the communication between the device 100 and the automatic payment counter.

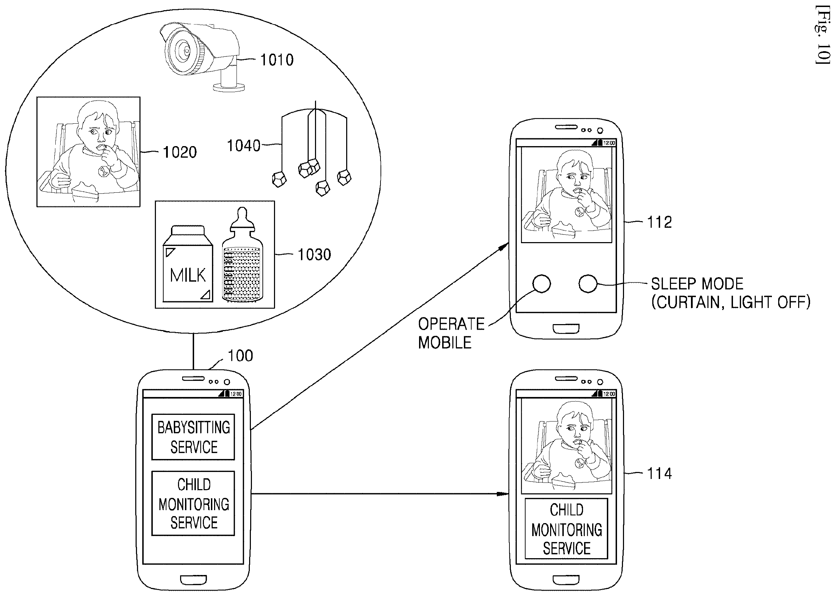

FIG. 10 illustrates a method in which a device according to an exemplary embodiment of the present disclosure provides a child monitoring service.

The device 100 may receive an image 1020 related to the child acquired by an image sensor device 1010 such as a CCTV device installed in a location near the child. The device 100 may receive information indicating a child related situation instead of the image 1020 from the image sensor device 1010. Also, the device 100 may receive information from a refrigerator device 1030 indicating that milk is in the refrigerator device 1030 and acquire location information of a feeding bottle. Further, the device 100 may also receive information of other devices such as a mobile 1040.

The device 100 may determine whether there is a situation related to the child based on the received information and search for child services are related to the situation and executable via the device 100.

The controller of the device 100 may determine the child related services executable via the device 100. Because the device 100 has the information of the devices such as the mobile 1040, the device 100 may operate the mobile 1040.

Meanwhile, the device 100 may receive information of services executable via the device 100 from the server 200. The server 200 may have already received the device information of various devices in the area. The server 200 may determine that the child is sleeping based on the motion of the child. Based on the information indicating that the child is sleeping, the server 200 may provide the device 100 with information about services such as closing a curtain and reducing volume of an audio device.

The device user may choose at least one of the services executable via the device 100. For example, the device user may determine that the services of operating the mobile, closing the curtain, and reducing the volume of the audio device are executable via the device.

The device 100 may display the information of executable services on the screen of the device 100 to provide the user with a service selected by the user.

The device 100 may display, according to an input of the user, a UI screen for operating the mobile or a UI screen for switching the mobile to a sleep mode. The UI screen for operating the mobile may be based on a template allowing the user to turn on and off the mobile via a mobile device installed in the mobile. The UI screen for switching to a sleep mode may display a series of operations of closing the curtain, turning off an interior light, and reducing the volume of the audio device.

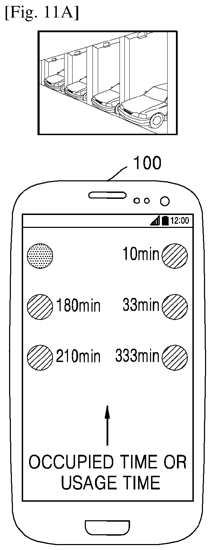

FIGS. 11A through 11C illustrate a method in which a device according to an exemplary embodiment of the present disclosure receives information indicating whether a space is occupied.

The user of the device 100 may use a service related to occupation of spaces located, for example, in a parking lot. Here, the term 'service related to occupation' may refer to a service providing information corresponding to a parking space, for example, vacancy, occupied time and occupation fee of the parking space.

As shown in FIG. 11A, when the user of the device 100 enters a parking lot, the device 100 may determine whether the device 100 is currently located in the parking lot based a parking stall occupancy sensor or a GPS sensor of the device 100, or through communication with a wireless LAN access point.

When the device 100 is located in the parking lot, the device 100 may generate context information including information indicating that the device is located in the parking lot. The context information may further include information indicating whether the device is entering or exiting the parking lot.

The parking stall occupancy sensor may be installed in each stall of the parking lot and directly communicate with the device 100 of the user. The device 100 may receive the occupancy information from the parking stall occupancy sensor.

The device 100 may send a parking lot management server a message requesting the list of services executable via the first device 100. The parking lot management server may collect information that may assist the device user to park the vehicle, and the collection of the information may be provided through the communication between the parking lot management server and the parking stall occupancy sensor.

The parking lot management server may send the occupancy information of each stall to the device 100. Also, the parking lot management server may provide the device 100 with information indicating whether a vacant space is available in the parking lot. For example, the parking lot management server may send the device 100 information indicating that a stall A has been occupied for 210 minutes, a stall B has been occupied for 180 minutes, and a stall C is vacant.

Based on the information received from the parking lot management server, the device 100 may display status information of the parking lot by using a template previously in the device 100. The status information of the parking lot displayed by the device 100 may include the presence of a vacant space and may further include expected wait time information in the event no vacant space is available.

Also, the device 100 may further display a property of each stall. For example, the property of the stall may include information indicating parking spaces designated only for women or the disabled, parking fees and discount information, and parking times the parking lot.

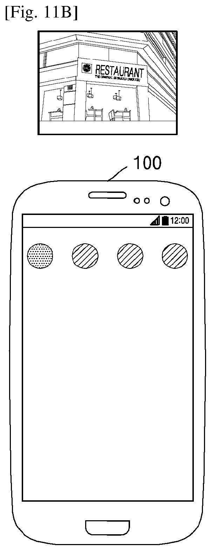

As shown in FIG. 11B, the device 100 determine whether a vacant seat is available in a restaurant. The device 100 may determine whether the device 100 is located near the restaurant by using the GPS sensor of the device or through the communication with a wireless LAN access point.

A restaurant management server may check the occupancy for each table space. Also, the restaurant management server may provide the device 100 with information whether a vacant seat is available. For example, the restaurant management server may provide the device 100 with information indicating that a table T1 accommodates up to four people and has been occupied for 210 minutes, a table T2 accommodates up to six people and has been occupied for 180 minutes, and a table T3 accommodates up to eight people and is vacant.

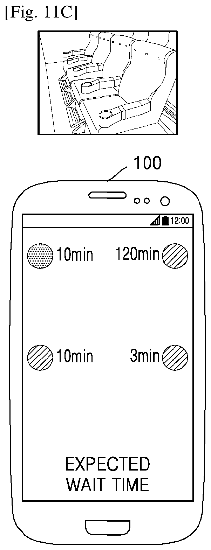

As shown in FIG. 11C, the device 100 may determine whether a vacant seat is available in a theater, a bus, a subway train, or a train. The device 100 may determine whether the device 100 is located in a theater, a bus, a subway train, or a train by using the GPS sensor of the device or through communication with a wireless LAN access point.

A seat management server may check a destination of each passenger by communicating with a device of the passenger in each of the seats. The seat management server may determine the destination of each passenger by analyzing information of total travel, schedules, regions of interest, etc. for each of the passengers. For example, the seat management server may acquire information indicating that a passenger boarded a subway train at 7 o'clock p.m. at a station near the passenger's office and is expected to exit the train at a station near the passenger's home, along with boarding time information and a travel path.

The seat management server may check occupancy information of each seat by using an occupancy sensor installed in each seat and send the device 100 the occupancy information. For example, a subway seat management server may provide the device 100 with information indicating that a seat S1 is seated by a passenger P1 who is expected to exit the train after 10 minutes, a seat S2 is seated by a passenger P2 who is expected to exit the train after 120 minutes, and a seat S3 is seated by a passenger P3 who is expected to exit the train after 3 minutes and will be vacant in 3 minutes.

Hereinbelow, the exchange of information between the device 100 and the parking stall occupancy sensor in the parking space will be described in detail.

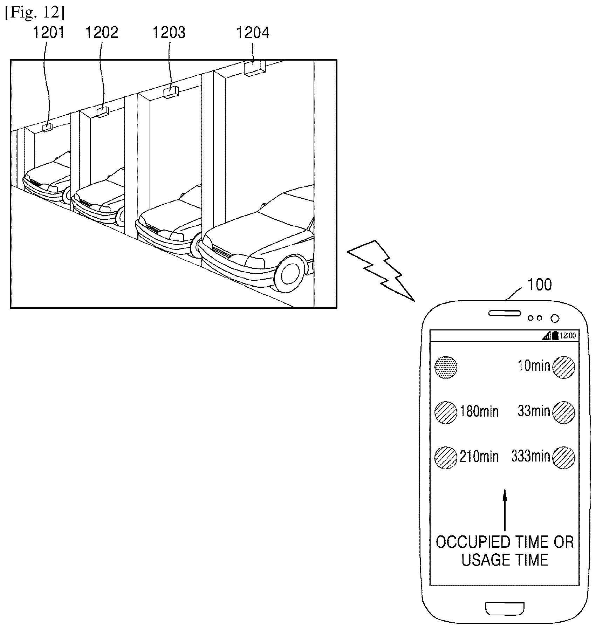

FIG. 12 illustrates a method in which the device 100 according to an exemplary embodiment of the present disclosure receives the parking space information in the parking lot.

As shown in FIG. 12, parking stall occupancy sensors 1201-1204 are each installed in a parking stall. Each of the parking stall occupancy sensors 1201-1204 may detect information of a vehicle was parked in the corresponding stall and determine the time at which the vehicle was parked. For example, the parking stall occupancy sensor 1201 may read the license plate number of a vehicle parked in a corresponding stall, for example, XXHEOXXXX, and determine that the vehicle was parked at 10:35:17 a.m. Also, the parking stall occupancy sensor 1201 may acquire owner information of the vehicle such as a phone number of the owner by communicating with the vehicle. The scope of the owner information of the vehicle revealed may be set according to permissions set by the owner.

Each of the parking stall occupancy sensors 1201-1204 may send corresponding stall information to the device 100. For example, the information sent by each of the parking stall occupancy sensors may include a device ID, a device type, a data type, a data attribute, and a sensing interval.

The device ID information may be unique identification information of the parking stall occupancy sensor that may be used for identifying the parking stall occupancy sensor. The device type information may indicate that the device is a parking stall occupancy sensor. The data type information may indicate the type of the sensed data, for example, whether the sensed data is text or sound. The data attribute information may be a specific value stored in the device. For example, a data attribute value may be expressed in a binary format, and a data attribute having a binary value of seven may indicate an occupancy time of seven minutes. The sensing interval information indicates an interval at which the parking stall occupancy sensor detects for the presence of the vehicle in the stall, and the interval may be, for example, one minute.

The device 100 may directly receive the occupancy information of the stall by communicating with the parking stall occupancy sensor and may display information based on the received information. In the case in which formats of information output by parking stall occupancy sensors of different parking lots are different from each other, the device 100 may process information of any type into a common format and display the information generated in a parking lot without needing to acquire any information from each parking lot in advance.

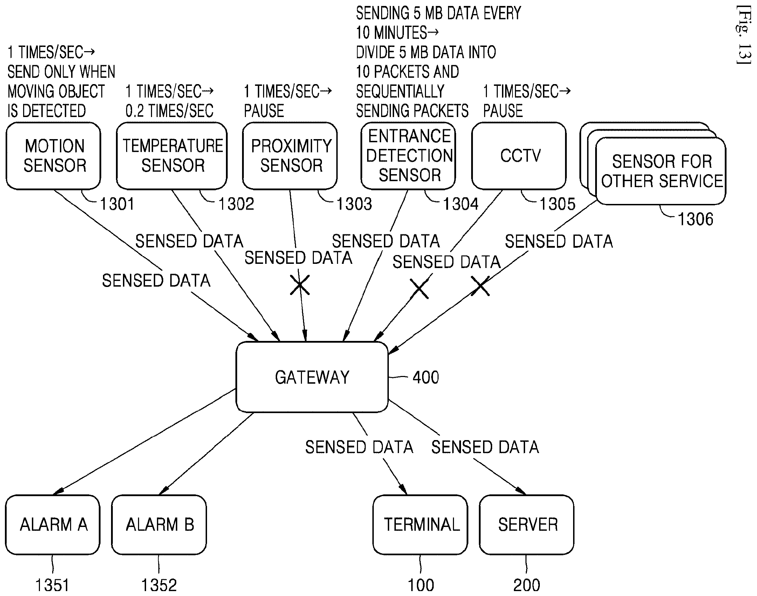

FIGS. 13 through 15 illustrate methods of providing IoT services through a gateway disposed between a first device and IoT devices.

The communication between the devices may be mediated by a gateway. Referring to FIG. 13, an example in which the gateway controls devices is described for an example of a security system.

FIG. 13 illustrates an example in which the gateway 400 controls devices in a security system according to an exemplary embodiment.

For a security system, the gateway 400 may be connected to a motion sensor 1301, a temperature sensor 1302, a proximity sensor 1303, an entrance detection sensor 1304, a CCTV device 1305, and at least one sensor directed to another service 1306. Also, the gateway 400 may be connected to alarms 1351 and 1352, a device 100, and a server 200. The motion sensor 1301 may be a sensor for detecting moving objects.

In the case in which the gateway 400 is consuming little resources and is capable of communicating with the devices easily, the gateway 400 may receive sensed data from all of the motion sensor 1301, the temperature sensor 1302, the proximity sensor 1303, the entrance detection sensor 1304, the CCTV device 1305, and the sensor for another service 1306 according to a default rule.

As a resource usage ratio of the gateway 400 increases and the communication between the gateway 400 and the devices becomes more difficult, the gateway 400 may pause the transfer of sensed data from, for example, the proximity sensor 1303, the CCTV device 1305, and the sensor for another service 1306. Further, the gateway 400 may change intervals for the transmission of the sensed data from the motion sensor 1301, the temperature sensor 1302, and the entrance detection sensor 1304 along with processing of the sensed data.

Afterwards, if the security system identifies the presence of an intruder, the gateway 400 may activate alarms 1351 and 1352 to indicate the presence of the intruder. In such a case, the gateway 400 may temporarily pause operations of all devices except those for indicating the presence of the intruder. The presence of the intruder may be determined by the gateway 400, but the present disclosure is not limited thereto and the presence of the intruder may be determined by the device 100 and/or the server 200 as well. Meanwhile, the gateway 400 may notify another gateway of the presence of the intruder. Also, the gateway 400 may notify the device 100 and/or the server 200 of the presence of the intruder.

The device 100 may receive information of the presence of the intruder from the gateway 400 and display the information by using a template previously stored in the device 100. For example, the device 100 may display text such as "Intruder Detected," output such information by a vibration or a sound, or output a combination thereof.

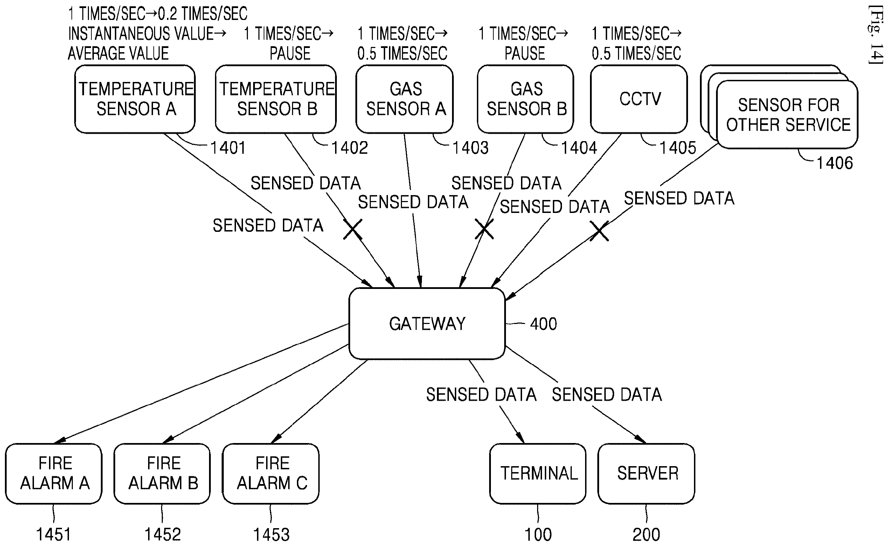

FIG. 14 illustrates an example in which the gateway 400 controls devices in a fire alarm system according to an exemplary embodiment.

For a fire alarm system, the gateway 400 may be connected to temperature sensors 1401 and 1402, gas sensors 1403 and 1404, a CCTV device 1405, and at least one sensor directed to another service 1406. Also, the gateway 400 may be connected to fire alarms 1451-1453, the device 100, and the server 200.

In the case in which the gateway 400 is consuming little resources and is capable of communicating with the devices easily, the gateway 400 may receive sensed data from all of the temperature sensors 1401 and 1402, the gas sensors 1403 and 1404, the CCTV device 1405, and the sensor for another service 1406 according to a default rule.

As a resource usage ratio of the gateway 400 increases and the communication between the gateway 400 and the devices becomes more difficult, the gateway 400 may pause the transfer of sensed data from, for example, the temperature sensor 1402, the gas sensor 1404, and the sensor for another service 1406. Further, the gateway 400 may change intervals for the transmission of the sensed data from the temperature sensor 1401, the gas sensor 1403, and the CCTV device 1405 along with processing of the sensed data.

Afterwards, if the fire alarm system determines a gas leak based on the sensed data acquired by the gas sensor 1403, the gateway 400 may activate and control both the gas sensors 1403 and 1404 such that the gas sensors 1403 and 1404 output sensed data at shorter intervals.

Afterwards, when the fire alarm system determines that there is a fire in the space, the gateway 400 may activate the fire alarms 1451-1453 to operate and indicate that there is a fire. In such a case, the gateway 400 may temporarily pause operations of all devices except those for indicating that there is a fire. The occurrence of the fire may be determined by the gateway 400, but the present disclosure is not limited thereto and the fire may be determined by the device 100 and/or the server 200 as well. Meanwhile, the gateway 400 may notify another gateway of the fire. Also, the gateway 400 may notify the device 100 and/or the server 200 of the fire to facilitate a rapid response to the fire.

The device 100 may receive information of the occurrence of the fire from the gateway 400 and display the information by using a template stored in the device 100. For example, the device 100 may display text such as "Fire Broke Out!,, output such information by a vibration or a sound, or output a combination thereof.

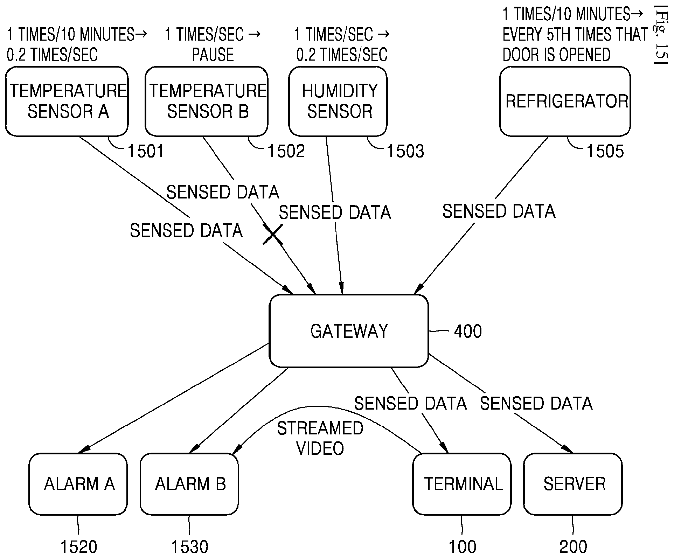

FIG. 15 illustrates an example in which the gateway 400 controls devices in a home networking system according to an exemplary embodiment.

For a home networking server, the gateway 400 may be connected to temperature sensors 1501 and 1502, a humidity sensor 503, a refrigerator 1505, an air conditioner, and a TV. Also, the gateway 400 may be connected to alarms 1520 and 1530, the device 100 and the server 200.

In the case in which the gateway 400 is consuming little resources and is capable of communicating with the devices, the gateway 400 may receive sensed data from all of the temperature sensors 1501 and 1502, the humidity sensor 1503, the refrigerator, 1505, the air conditioner, and the TV according to a default rule.

When the device 100 provides the TV with streaming video, the resource usage ratio of the gateway 400 may increase and the communication between the gateway 400 and the devices may become more difficult. In such a case, the gateway 400 may pause the transfer of sensed data from, for example, the temperature sensor 1502 that is located near the refrigerator. Further, the gateway 400 may change intervals for the transmission of the sensed data from the temperature sensor 1501, the humidity sensor 1503, the refrigerator 1505, the air conditioner, and the TV along with processing of the sensed data.

Meanwhile, if it is determined that a temperature in the house is higher than a threshold, the gateway 400 may control the air conditioner to turn on. Before turning on the air conditioner, the device 100 may display an information message on a screen so that the user may input an operation command.

The device 100 may display the temperature and humidity of the house based on the information received from the gateway 400 or directly from the sensors. The device 100 may display a desired temperature and a desired humidity input by the user. For another example, the device 100 may provide a UI that enables the user to specifically control the air conditioner by displaying various options for air conditioner functions such as fan speed, fan power and setting a timer.

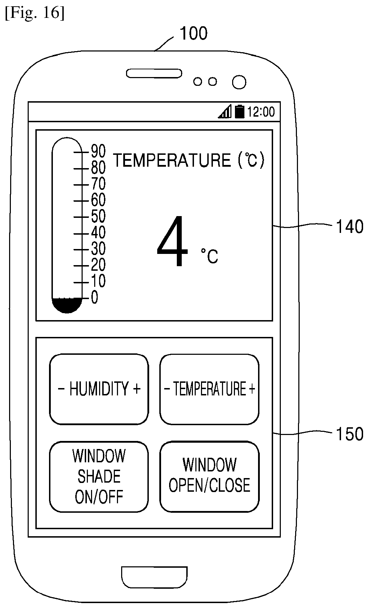

FIGS. 16 through 18 illustrate templates stored in a device according to an exemplary embodiment of the present disclosure.

The device 100 in the present disclosure may receive information of various devices and executable services from the neighboring devices or the server. However, in the event the formats sent by the various devices or the server are not the same, the device 100 may have to decode or encode the received information and format the same to a format compatible with the transmitting device.

According to the present disclosure, the device 100 receiving the information in different formats displays the received information by using a common template. Thus, the present disclosure may provide an environment in which the device 100 may utilize the information sent by devices that the device 100 has not communicated with before.

Accordingly, the template may require commonly displayed information. That is, the template may require common information such as identification information of a device, a device type, a data type, a data attribute, and a sensing interval.

For example, in order for a device having received temperature information from a temperature sensor to display the information by using a template, the template may require unique ID information of the temperature sensor, the device type information identifying the temperature sensor, the data type information indicating that temperature is expressed by a number, the data attribute information such as 25 °C, for example, and the sensing interval information indicating that the data was sensed once every minute.

In another example, when the device 100 receives window opening/closing device information, the device 100 may identify the window opening/closing device and the window to be opened or closed by the ID information of the window opening/closing device. Also, the window opening/closing device information may include either an open/close state of the window or how much the window is to be closed. The window opening/closing device information may indicate that data was sensed every five minutes. The device may generate an output screen by adding control information of the window opening/closing device to the template based on the device information.

FIG. 16 illustrates a screen for controlling devices with regard to the child monitoring service.

As shown in FIG. 16, the screen of the device 100 may include a display area 140 and a control area 150. The display area 140 shows device information received from the neighboring devices and information received from the server 200. The control area 150 allows control of the executable services based on the context information of the device 100.

A user interface (UI) shown in a display of the device 100 regarding the child monitoring service described above with reference to FIG. 10 will now be described. The temperature sensor and the humidity sensor may acquire information of the temperature and the humidity of the space in which the child is located, and the device 100 may receive the information. The device 100 or the server 200 connected to the device 100 may determine that the child is sleeping by analyzing the motion of the child by use of the image sensor such as the CCTV device. The device 100 may display which devices related to the child monitoring service are controllable by the user via the device 100.

For example, the sensors may detect that the room temperature of the space in which the child is located is 44 °C and the humidity is 30%. The device 100 may display that the room temperature and the humidity can be increased. The server 200 rather than the device 100 may determine to increase the room temperature and the humidity.

The device 100 may communicate with neighboring devices that may increase the room temperature and the humidity. For example, the device 100 may send a command to the air conditioner or the humidifier to increase the humidity to 50% and temperature to 16 °C. In response to a sudden change in temperature or lighting, for example, the device 100 may send a command to a window shade device to block external light or to a window device to close a window.

In order to display information of various devices in the display area 140 and the control area 150, the device 100 has to receive information from various devices. In the case in which the receipt of information from the temperature sensor or humidity sensor and the control of the air conditioner device require separate and unique application programs, the installation of each application program is inefficient in terms of time and cost and may inconvenience the user manipulating the device.

Thus, it is important to process the information received from a temperature/humidity sensor device or an air conditioner device so that the information may be utilized in the common template. Meanwhile, one or more templates may be stored on the device in advance.

The storage of the device 100 may store various kinds of templates. The device 100 may classify the various kinds of templates according to types of the executable services and store the classified templates. For example, the child monitoring service and the indoor lighting control service are different from each other in their purposes and types, and the types and number of devices controllable for the child monitoring service may be different from the types and number of devices controllable for the indoor lighting control service. Accordingly, the template for the child monitoring service may be different from the template for the indoor lighting control service.

The device 100 need not store all the templates for all the services, but may store only the templates related to essential information only, so that the amount of resources used is minimized. The essential information may include information of the device ID, the device type, the data type, and the data attribute. The inclusion of the sensing interval information may be determined separately for each device.

Meanwhile, because it is difficult to display a wide variety of information related to various devices in the device 100, the templates stored in the device 100 may be insufficient to display all the information for controlling the devices. In such a case, the device 100 may compose a new template for itself or receive the new template from the server 200 or another device.

The server 200, which determines the services executable by the device 100 based on the context information and the device information received from the device 100, may transmit the new template capable of displaying a service to the device 100 when the templates previously stored in the device 100 are inadequate for displaying the service. The device 100 may compose a new UI for controlling the device 100 by using the new template and execute the service in response to a command from the user.

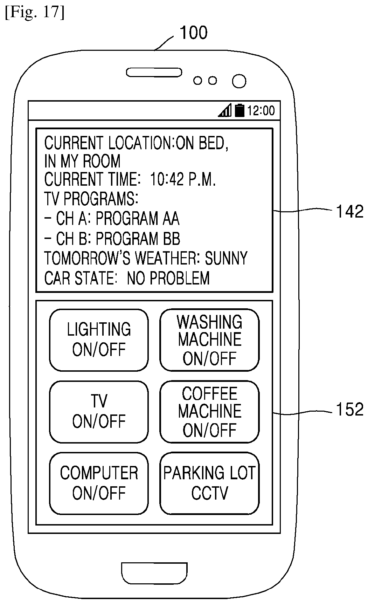

FIG. 17 illustrates a screen for controlling devices with regard to the smart home service. The screen of the device 100 may include a display area 142 and a control area 152.

The display area 142 shows device information received from the neighboring devices and information received from the server 200. For example, display area 142 may show that the device 100 is located on a bed in a room, along with a current time, which was received from the CCTV device or the access point in the room. Also, the device 100 may receive television program information from a TV device and display the program information for each channel, e.g. information of a program AA broadcast on a channel A and a program BB broadcast on a channel B. Further, the device 100 may receive weather information through a weather application in the device 100 or from the server 200 and display the weather information. Information of a vehicle state may also be displayed, and such information may be acquired from a CCTV device installed in a garage where the vehicle is parked or a vehicle self-diagnostic sensor.

The control area 152 allows control of the executable services based on the context information of the device 100.

A UI shown in the display of the device 100 regarding the home networking service described above with reference to FIG. 15 will now be described. The illumination sensor may acquire illumination information of the space in which the device is located, and the device 100 may receive the information. The device 100 or the server 200 connected to the device 100 may determine that the user is watching the TV, for example, by analyzing movement of the user via the image sensor such as the CCTV device. The device 100 may display that the user can control the electric appliances by use of the device 100.

For example, the device 100 may display a control button for adjusting the illumination level or turning lighting on or off. When the illumination level in the room in which the user is watching the TV is outside of a normal range, the device 100 may display the illumination information so that the user may control the operation of the lightings to adjust the illumination level to a level suitable for watching the TV. The device 100 may display a control button for turning on or off the TV the user is watching or a TV in another room. The device 100 may receive the information about the laundry from the washing machine to display on the screen. The device 100 may display a control button for turning on or off the washing machine so that the user turns on or off the washing machine based on the weather forecast for the following day. Further, the device 100 may display a list of services executable by the device 100 that allow the user, for example, to turn on or off a coffee machine and or view images or video captured by the CCTV device of the garage.

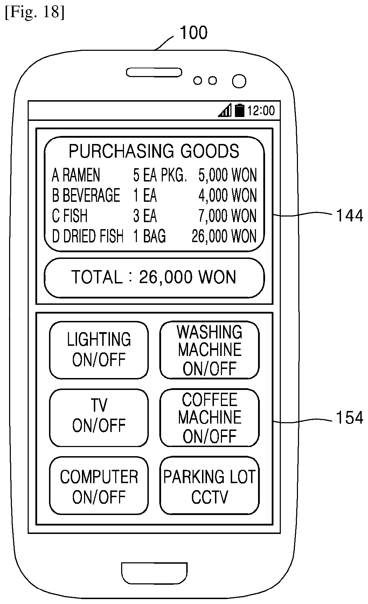

FIG. 18 illustrates a screen for controlling devices with regard to the shopping center payment service. The screen of the device 100 may include a display area 144 and a control area 154.

The display area 144 shows device information received from the neighboring devices and information received from the server 200. For example, display area 144 may show the information of goods contained in the cart as determined by the CCTV device or the cart device. Here, prices of the goods in the cart may be calculated and further shown on the screen.

The control area 154 allows control of the executable services based on the context information of the device 100. The device 100 may display that a credit card stored in the device 100 may be used for payment method and that staff of the shopping center can be contacted. Also, the device 100 may accumulate movement of the user in the shopping center and display tracked movement of the user upon a selection of the service by the user. The device 100 may display a screen capable of controlling the vehicle to be started at a certain time following the completion of the payment. Also, the device 100 may display screens capable of calling an elevator to a floor on which the user is located, or for executing a memopad application file that stores the schedule of the user or a list of goods to be purchased.

To display information of various devices in the display area 144 and the control area 154, the device 100 receives information from various devices. In the case in which the receipt of information from the cart sensor and the elevator call require separate and unique application programs, the installation of each application program is inefficient in terms of time and cost and may inconvenience the user manipulating the device.

Thus, it is important to process the information received from a cart sensor device or an elevator device so that the information may be utilized in the common template, details of which will be described below.

The device information of the devices according to an exemplary embodiment may be stored in a table form. For example, a device information table may include fields of: a device ID field, a device type field, a data type field, a data attribute field, and a sensing interval field.

The device ID field may indicate an identification number of the device, and the device type field may indicate the type of the device. For example, a value in the device type field may be 'temperature sensor', 'acoustic sensor', 'gas sensor', 'clock', 'refrigerator', 'washing machine', or 'fire alarm'.

The data type field may indicate the type of data sensed by the devices. For example, the data type may be 'number', 'sound', 'character', 'image', or 'moving picture'.

The data attribute field may indicate the attribute of the data sensed by the devices. For example, the attribute may be 'number value', 'data value', 'byte value', or 'string value'.

The sensing interval field may indicate an interval at which the device detects or senses the data. The sensing interval may be set to a default value which differs for each device.

Meanwhile, the information of the services executable by the device may be stored in a form of a service information table. The service information table may include fields of: a service ID field, a required device field, a first priority field, a second priority field, and a third priority field.

The service ID field may indicate an identification number indicative of the service, and the required device field may indicate the type and number of devices required for providing the service. For example, a value in the required device field may be 'two temperature sensors', 'three gas sensors', or 'one fire alarm'.

Each of the first through third priority fields may indicate the type and number of devices corresponding to respective priority among the devices required for providing the service. For example, a value in the first priority field may be 'one temperature sensor', 'one gas sensor', or 'one fire alarm', and a value in the second priority field may be 'one temperature sensor' or 'one gas sensor', and a value in the third priority field may be 'one gas sensor'.

The information stored in the required device field and the first through third priority fields may be used for selecting the minimum number of devices for providing uninterrupted operation of the services.

The services available in the present disclosure may be stored in a form of the device information table. The device information table associated with the services may include an associated service field in addition to the fields of the device information table described above.

The associated service field may indicate the identification number indicative of the service. The device 100 or the server 200 may determine the identification number indicative of the service to be written in the associated service field by comparing the device information table with the service information table. For example, with regard to a device A which is a temperature sensor, the associated service field may be written by 'home networking service B' and 'fire alarm A'.

A control message that the gateway according to an exemplary embodiment sends to a sensor device to control the transmission of the sensed data is described below.

The control message may have a value of, for example, two bytes. In such a case, the control message may include a control message type of 1 bit, a data manipulation scheme of 3 bits, a sub-rule for the data manipulation scheme of 4 bits, and data for changing the transmission interval of the sensed data of 8 bits.

The control message type of 1 bit may indicate whether the control message is a message to pause the transmission of the sensed data of the sensor device or not. For example, if the control message type of 1 bit has a value of '1', the control message may be a message for allowing and controlling the transmission of the sensed data of the sensor device. If the control message type of 1 bit has a value of '0', the control message may be a message to pause the transmission of the sensed data. Meanwhile, if the control message type of 1 bit has a value of '0' and all the remaining bits in the control message have a value of '1', the control message may be a message to pause the transmission of the sensed data and accumulate the sensed data.

The data manipulation scheme of 3 bits may indicate how the device will have to manipulate the sensed data. For example, if the data manipulation scheme of 3 bits has a value of '0', the control message may be a message that requires no manipulation of the sensed data. If the data manipulation scheme of 3 bits has a value of '1', the control message may be a message for controlling the device to transmit an average value of the sensed data. If the data manipulation scheme of 3 bits has a value of '2', the control message may be a message for controlling the device to accumulate the sensed data and transmit the accumulated data. If the data manipulation scheme of 3 bits has a value of '3', the control message may be a message for controlling the device to divide the sensed data into a plurality of packets and sequentially transmit the packets. If the data manipulation scheme of 3 bits has a value of '4', the control message may be a message for controlling the device to compare newly sensed data with previous data and transmit only the changed data. If the data manipulation scheme of 3 bits has a value of '5', the control message may be a message for controlling the device to accumulate average values of the sensed data and transmit the accumulated average data.

The sub-rule for the data manipulation scheme of 4 bits may indicate a number associated with the manipulation of the sensed data. For example, the sub-rule for the data manipulation scheme of 4 bits may indicate a number of packets into which the sensed data is divided, the amount of sensed data to be accumulated, or the amount of sensed data to be averaged.

The data for changing the transmission interval of the sensed data of 8 bits may indicate the transmission interval of the sensed data.

The functionalities of the exemplary embodiments may be written into a computer-readable program, stored in a non-transitory computer-readable storage medium, and implemented in a general-purpose digital computer executing the program by use of the non-transitory computer-readable storage medium. The non-transitory computer-readable storage medium may be any kind of medium that may be accessed by a computer regardless of being volatile or non-volatile and detachable or non-detachable. Also, the computer-readable medium includes computer storage medium and transmission medium. The computer storage medium includes any kind of medium, regardless of being volatile or non-volatile and detachable or non-detachable, for storing information such as a computer-readable instruction, a data structure, a program module, and the other data. The transmission medium includes a mechanism for transmitting the computer-readable instruction, the data structure, the program module, or a carrier wave modulated with data signal, and any kind of information transfer medium.

Also, the term 'unit' in the embodiments may be a hardware component such as a processor and a circuit or a software component executed by a hardware configuration such as the processor.

It should be understood that embodiments described herein should be considered in a descriptive sense only and not for purposes of limitation. Descriptions of features or aspects within each embodiment should typically be considered as available for other similar features or aspects in other embodiments. For example, a component described in terms of a singular form may be may be divided into plural component or distributed over network-coupled computer systems. Similarly, plural components or distributed components may be combined during a physical implementation.

While one or more embodiments have been described with reference to the figures, it will be understood by those of ordinary skill in the art that various changes in form and details may be made therein without departing from the scope as defined by the following claims.

## Claims

1. A method executed by a first device (100) for providing a service to a user, comprising:
generating context information of the first device (100) indicating a state of the first device (100);
transmitting, to a server (200), the context information of the first device (100) and a request for a list of services provided by one or more second devices (300) and that are accessible by the first device (100);
receiving, from the server (200), the list of services provided by one or more second devices (300) and that are accessible by the first device (100) in response to the request;
determining at least one service from the received list of services; and
communicating with at least one second device (300) that corresponds to the determined at least one service to control the at least one second (300) device to provide the determined at least one service,
wherein the received list of services comprises services determined by the server (200) based on the context information of the first device (100).

2. The method of claim 1, further comprising:
generating a user interface of the at least one service on a display of the first device (100) based on a template stored in the first device (100) for the at least one service.

3. The method of claim 1, wherein the context information of the first device (100) comprises at least one of: device information, time information, location information, temperature information, humidity information, pressure information, sound information, motion information, proximity sensing information, gas sensing information, and heat sensing information.

4. The method of claim 1, wherein the request comprises information on a service corresponding to a second device (300) detected by the first device (100).

5. The method of claim 1, wherein the one or more second devices (300) are detected by the server (200).

6. The method of claim 2, wherein the template is stored in the first device (100) and comprises a display area configured to display information of the at least one second device (300) corresponding to the determined at least one service, and a control area configured to control the at least one second device (300).

7. The method of claim 2, wherein, prior to generating the user interface based on the template stored in the first device (100) for the at least one service, receiving the template from the server (200) and then storing the received template, and, after generating the user interface using the new template, communicating with the at least one second device (300) to provide the at least one service in response to a command received from the user through the user interface.

8. A first device (100) for providing a service to a user, comprising:
a communication interface (130) configured to
transmit, to a server (200), context information indicating a state of the first device (100) and a request for a list of services provided by one or more second devices (300) and that are accessible by the first device (100) and
receive, from the server (200), the list of services provided by one or more
second devices (300) and that are accessible by the first device (100);
and
a controller (110) configured to
determine at least one service from the received list of services,
control the communication interface (130) to communicate with at least one second device (300) that corresponds to the determined at least one service to control the at least one second device (300) to provide the determined at least one service,
wherein the received list of services comprises services determined by the server (200) based on the context information of the first device (100).

9. The first device (100) of claim 8, wherein the controller (110) is further configured to generate a user interface of the at least one service on a display of the first device (100) based on a template stored in the first device (100) for the at least one service.

10. The first device (100) of claim 8, wherein the context information comprises at least one of: device information, time information, location information, temperature information, humidity information, pressure information, sound information, motion information, proximity sensing information, gas sensing information, and heat sensing information.

11. The first device (100) of claim 8, wherein the request comprises information on a service corresponding to a second device (300) detected by the device (100).

12. The first device (100) of claim 8, wherein the one or more second devices (300) are detected by the server (200).

13. The first device (100) of claim 9, further comprising:
a memory (120) configured to store the template, the template comprising a display area configured to display information of the at least one second device (300) corresponding to the determined at least one service, and
a control area configured to control the at least one second device (300).

14. The first device (100) of claim 9, wherein, the controller (110) is further configured to
control the communication interface (130) to receive the template from the server (200),
store the template in the memory (120), and
control the communication interface (130) to communicate with the at least one second device (300) to provide the at least one service in response to a command received from a user through the user interface.

## Patentansprüche

1. Verfahren, das von einer ersten Einheit (100) ausgeführt wird, um einen Dienst für einen Benutzer bereitzustellen, aufweisend:
ein Generieren von Kontextinformationen der ersten Einheit (100), die einen Zustand der ersten Einheit (100) angeben;
ein Übertragen, an einen Server (200), der Kontextinformationen der ersten Einheit (100) und einer Anforderung einer Liste von Diensten, die durch eine oder mehrere zweite Einheiten (300) bereitgestellt werden, und auf die durch die erste Einheit (100) zugegriffen werden kann;
ein Empfangen, von dem Server (200), der Liste von Diensten, die durch eine oder mehrere zweite Einheiten (300) bereitgestellt werden, und auf die durch die erste Einheit (100) in Reaktion auf die Anforderung zugegriffen werden kann;
ein Bestimmen von mindestens einem Dienst aus der empfangenen Liste von Diensten;
und ein Austauschen von Daten mit mindestens einer zweiten Einheit (300), die dem mindestens einen bestimmten Dienst entspricht, um die mindestens eine zweite Einheit (300) zu steuern, den mindestens einen bestimmten Dienst bereitzustellen, wobei die empfangene Liste von Diensten durch den Server (200) bestimmte Dienste auf Grundlage der Kontextinformationen der ersten Einheit (100) aufweist.

2. Verfahren nach Anspruch 1, ferner aufweisend:
ein Generieren einer Benutzeroberfläche des mindestens einen Dienstes auf einer Anzeige der ersten Einheit (100) auf Grundlage einer Vorlage, die in der ersten Einheit (100) für den mindestens einen Dienst gespeichert ist.

3. Verfahren nach Anspruch 1, wobei die Kontextinformationen der ersten Einheit (100) mindestens eines aufweisen von:
Einheiteninformationen, Zeitinformationen, Standortinformationen, Temperaturinformationen, Feuchtigkeitsinformationen, Druckinformationen, Toninformationen, Bewegungsinformationen, Näherungsdetektionsinformationen, Gasnachweisinformationen und Wärmedetektionsinformationen.

4. Verfahren nach Anspruch 1, wobei die Anforderung Informationen über einen Dienst aufweist, der einer zweiten Einheit (300) entspricht, die durch die erste Einheit (100) erfasst wurden.

5. Verfahren nach Anspruch 1, wobei die eine oder die mehreren zweiten Einheiten (300) durch den Server (200) erfasst werden.

6. Verfahren nach Anspruch 2, wobei die Vorlage in der ersten Einheit (100) gespeichert ist und einen Anzeigebereich aufweist, der konfiguriert ist, um Informationen der mindestens einen zweiten Einheit (300) anzuzeigen, die dem mindestens einen bestimmten Dienst entspricht, und einen Steuerbereich, der konfiguriert ist, um die mindestens eine zweite Einheit (300) zu steuern.

7. Verfahren nach Anspruch 2, wobei vor einem Generieren der Benutzeroberfläche auf Grundlage der Vorlage, die in der ersten Einheit (100) für den mindestens einen Dienst gespeichert ist, die Vorlage von dem Server (200) empfangen wird und die empfangende Vorlage dann gespeichert wird, und nach einem Generieren der Benutzeroberfläche unter Verwendung der neuen Vorlage mit der mindestens einen zweiten Einheit (300) Daten ausgetauscht werden, um den mindestens einen Dienst in Reaktion auf einen Befehl bereitzustellen, der von dem Benutzer über die Benutzeroberfläche empfangen wurde.

8. Erste Einheit (100) zum Bereitstellen eines Dienstes für einen Benutzer, aufweisend:
eine Datenübertragungsschnittstelle (130), die konfiguriert ist, um an einen Server (200), der Kontextinformationen, die einen Zustand der ersten Einheit (100) angeben, und eine Anforderung einer Liste von Diensten zu übertragen, die durch eine oder mehrere zweite Einheiten (300) bereitgestellt werden und auf die durch die erste Einheit (100) zugegriffen werden kann, und von dem Server (200) die Liste von Diensten, die durch eine oder mehrere zweite Einheiten (300) bereitgestellt werden und auf die durch die erste Einheit (100) zugegriffen werden kann, zu empfangen;
und einen Controller (110), der konfiguriert ist, um mindestens einen Dienst aus der empfangenen Liste von Diensten zu bestimmen, die Datenübertragungsschnittstelle (130) zu steuern, um mit mindestens einer zweiten Einheit (300) Daten auszutauschen, die dem mindestens einen bestimmten Dienst entspricht, um die mindestens eine zweite Einheit (300) zu steuern, den mindestens einen bestimmten Dienst bereitzustellen, wobei die empfangene Liste von Diensten durch den Server (200) bestimmte Dienste auf Grundlage der Kontextinformationen der ersten Einheit (100) aufweist.

9. Erste Einheit (100) nach Anspruch 8, wobei der Controller (110) ferner konfiguriert ist, um eine Benutzeroberfläche des mindestens einen Dienstes auf einer Anzeige der ersten Einheit (100) auf Grundlage einer Vorlage zu generieren, die in der ersten Einheit (100) für den mindestens einen Dienst gespeichert ist.

10. Erste Einheit (100) nach Anspruch 8, wobei die Kontextinformationen mindestens eines aufweisen von:
Einheiteninformationen, Zeitinformationen, Standortinformationen, Temperaturinformationen, Feuchtigkeitsinformationen, Druckinformationen, Toninformationen, Bewegungsinformationen, Näherungsdetektionsinformationen, Gasnachweisinformationen und Wärmedetektionsinformationen.

11. Erste Einheit (100) nach Anspruch 8, wobei die Anforderung Informationen über einen Dienst aufweist, der einer zweiten Einheit (300) entspricht, die durch die Einheit (100) erfasst wurden.

12. Erste Einheit (100) nach Anspruch 8, wobei die eine oder die mehreren zweiten Einheiten (300) durch den Server (200) erfasst werden.

13. Erste Einheit (100) nach Anspruch 9, ferner aufweisend:
einen Arbeitsspeicher (120), der konfiguriert ist, um die Vorlage zu speichern, wobei die Vorlage einen Anzeigebereich aufweist, der konfiguriert ist, um Informationen der mindestens einen zweiten Einheit (300) anzuzeigen, die dem mindestens einen bestimmten Dienst entspricht, und einen Steuerbereich, der konfiguriert ist, um die mindestens eine zweite Einheit (300) zu steuern.

14. Erste Einheit (100) nach Anspruch 9, wobei der Controller (110) ferner konfiguriert ist, um die Datenübertragungsschnittstelle (130) zu steuern, um die Vorlage von dem Server (200) zu empfangen, die Vorlage in dem Arbeitsspeicher (120) zu speichern und die Datenübertragungsschnittstelle (130) zu steuern, um mit der mindestens einen zweiten Einheit (300) Daten auszutauschen, um den mindestens einen Dienst in Reaktion auf einen Befehl bereitzustellen, der von einem Benutzer über die Benutzeroberfläche empfangen wurde.

## Revendications

1. Procédé exécuté par un premier dispositif (100) destiné à fournir un service à un utilisateur, comprenant :
la génération d'informations de contexte du premier dispositif (100) indiquant un état du premier dispositif (100) ;
la transmission, à un serveur (200), des informations de contexte du premier dispositif (100) et d'une requête d'une liste de services fournis par un ou plusieurs deuxièmes dispositifs (300) et qui sont accessibles par le premier dispositif (100) ;
la réception, depuis le serveur (200), de la liste de services fournis par un ou plusieurs deuxièmes dispositifs (300) et qui sont accessibles par le premier dispositif (100) en réponse à la requête ;
la détermination d'au moins un service depuis la liste de services reçue ;
et la communication avec au moins un deuxième dispositif (300) qui correspond à l'au moins un service déterminé pour commander à l'au moins un deuxième dispositif (300) de fournir l'au moins un service déterminé, dans lequel la liste de services reçue comprend des services déterminés par le serveur (200) sur la base des informations de contexte du premier dispositif (100).

2. Procédé selon la revendication 1, comprenant en outre :
la génération d'une interface utilisateur de l'au moins un service sur un affichage du premier dispositif (100) sur la base d'un modèle stocké dans le premier dispositif (100) pour l'au moins un service.

3. Procédé selon la revendication 1, dans lequel les informations de contexte du premier dispositif (100) comprennent au moins l'une parmi :
des informations de dispositif, informations de temps, informations de lieu, informations de température, informations d'humidité, informations de pression, informations de son, informations de mouvement, informations de détection de proximité, informations de détection de gaz, et informations de détection de chaleur.

4. Procédé selon la revendication 1, dans lequel la requête comprend des informations sur un service correspondant à un deuxième dispositif (300) détecté par le premier dispositif (100).

5. Procédé selon la revendication 1, dans lequel l'un ou plusieurs deuxièmes dispositifs (300) sont détectés par le serveur (200).

6. Procédé selon la revendication 2, dans lequel le modèle est stocké dans le premier dispositif (100) et comprend une zone d'affichage configurée pour afficher des informations de l'au moins un deuxième dispositif (300) correspondant à l'au moins un service déterminé, et une zone de commande configurée pour commander l'au moins un deuxième dispositif (300).

7. Procédé selon la revendication 2, dans lequel, avant la génération de l'interface utilisateur sur la base du modèle stocké dans le premier dispositif (100) pour l'au moins un service, la réception du modèle depuis le serveur (200) et ensuite le stockage du modèle reçu, et, après la génération de l'interface utilisateur en utilisant le nouveau modèle, la communication avec l'au moins un deuxième dispositif (300) pour fournir l'au moins un service en réponse à une commande reçue depuis l'utilisateur par le biais de l'interface utilisateur.

8. Premier dispositif (100) destiné à fournir un service à un utilisateur, comprenant :
une interface de communication (130) configurée pour transmettre, à un serveur (200), des informations de contexte indiquant un état du premier dispositif (100) et une requête d'une liste de services fournis par un ou plusieurs deuxièmes dispositifs (300) et qui sont accessibles par le premier dispositif (100) et recevoir, depuis le serveur (200), la liste de services fournis par un ou plusieurs deuxièmes dispositifs (300) et qui sont accessibles par le premier dispositif (100) ;
et une unité de commande (110) configurée pour déterminer au moins un service depuis la liste de services reçue, commander à l'interface de communication (130) de communiquer avec au moins un deuxième dispositif (300) qui correspond à l'au moins un service déterminé pour commander à l'au moins un deuxième dispositif (300) de fournir l'au moins un service déterminé, dans lequel la liste de services reçue comprend des services déterminés par le serveur (200) sur la base des informations de contexte du premier dispositif (100).

9. Premier dispositif (100) selon la revendication 8, dans lequel l'unité de commande (110) est en outre configurée pour générer une interface utilisateur de l'au moins un service sur un affichage du premier dispositif (100) sur la base d'un modèle stocké dans le premier dispositif (100) pour l'au moins un service.

10. Premier dispositif (100) selon la revendication 8, dans lequel les informations de contexte comprennent au moins l'une parmi :
des informations de dispositif, informations de temps, informations de lieu, informations de température, informations d'humidité, informations de pression, informations de son, informations de mouvement, informations de détection de proximité, informations de détection de gaz, et informations de détection de chaleur.

11. Premier dispositif (100) selon la revendication 8, dans lequel la requête comprend des informations sur un service correspondant à un deuxième dispositif (300) détecté par le dispositif (100).

12. Premier dispositif (100) selon la revendication 8, dans lequel l'un ou plusieurs deuxièmes dispositifs (300) sont détectés par le serveur (200).

13. Premier dispositif (100) selon la revendication 9, comprenant en outre :
une mémoire (120) configurée pour stocker le modèle, le modèle comprenant une zone d'affichage configurée pour afficher des informations de l'au moins un deuxième dispositif (300) correspondant à l'au moins un service déterminé, et une zone de commande configurée pour commander l'au moins un deuxième dispositif (300).

14. Premier dispositif (100) selon la revendication 9, dans lequel l'unité de commande (110) est en outre configurée pour commander à l'interface de communication (130) de recevoir le modèle depuis le serveur (200), stocker le modèle dans la mémoire (120), et commander à l'interface de communication (130) de communiquer avec l'au moins un deuxième dispositif (300) pour fournir l'au moins un service en réponse à une commande reçue depuis un utilisateur par le biais de l"interface utilisateur.
